# EUROPÄISCHE PATENTSCHRIFT

(11) **EP 2 736 619 B1**
(45) Veröffentlichungstag und Bekanntmachung des Hinweises auf die Patenterteilung: **18.05.2016**
(21) Anmeldenummer: 12711744.8
(22) Anmeldetag: 15.03.2012
(51) Int. Cl.: B01D 29/11, B01D 29/39

(54) **VORRICHTUNG ZUR ABTRENNUNG VON FESTSTOFFPARTIKELN AUS FLÜSSIGKEITEN UND DEREN ANWENDUNG**
DEVICE FOR SEPARATING SOLID PARTICLES FROM LIQUIDS, AND USE THEREOF
DISPOSITIF DESTINÉ À LA SÉPARATION DE PARTICULES SOLIDES DE LIQUIDES ET UTILISATION CORRESPONDANTE

(30) Priorität: 28.07.2011 CH 12622011
(43) Veröffentlichungstag der Anmeldung: 04.06.2014
(73) Patentinhaber: DrM, Dr. Müller AG, 8708 Männedorf (CH)
(72) Erfinder: SCHUMACHER, Ivo, CH-8706 Meilen (CH)
(74) Vertreter: Herrmann, Peter Johannes
(86) Internationale Anmeldenummer: PCT/CH2012/000061
(87) Internationale Veröffentlichungsnummer: WO 2013/013327

(56) Entgegenhaltungen:
- WO-A1-03/059494
- FR-A- 1 422 314
- US-A- 2 568 085

## Beschreibung

Die Erfindung betrifft eine Vorrichtung zur Abtrennung von Feststoffenpartikeln aus Flüssigkeiten, bestehend aus einem Druckbehälter, einem oder mehreren Filterelementregistern mit hängend an einem horizontalen Filtratablaufrohr angeordneten Filterelementen, wobei die Filterelemente aus einem im wesentlichen flachen Stützgitter, einem rundum geschlossenen Filtermedium und dazwischen hängenden Distanzhaltern bestehen und deren Anwendung.

Vorrichtungen zur Abtrennung von Feststoffenpartikeln aus Flüssigkeiten und Gasen zum Einbau in einen Druckbehälter in Form eines Registers, an welchem Filterelemente befestigt sind, sind bekannt. Solche Filterelemente sind vorgesehen zur Abtrennung großer Feststoffmengen, insbesondere aus Flüssigkeiten.

EP 0556 188 beschreibt ein Kerzenfilter, in welchem Filterkerzen mit einem zylindrischen Stützgewebe in einem Register zusammengefasst in einem Druckbehälter eingebaut sind. Das bekannte Kerzenfilter ist zum Abtrennen großer Feststoffmengen geeignet, die Filterelemente beanspruchen jedoch bei geringen Feststoffmengen ein zu großes Volumen so, dass der Druckbehälter unnötig gross und kostspielig wird.

Nach der DE OS 2114226 wird ein Filter beschrieben, in welchem Filterschläuche aus einem durchlässigen, biegsamen Mantel bestehen. Im Innern der Filterschläuche befinden sich Stützeinsätze aus Kunststoff mit Öffnungen. Anstelle eines Stützzylinders oder einer Drahtwendel kann auch ein Blatt aus Metall oder Kunststoff mit Schlitzen vorgesehen werden. Anstelle von Schlitzen wird auch ein Blattmaterial mit einer Anzahl von kreisförmigen Öffnungen oder Perforationen vorgeschlagen. Die bekannten Konstruktionen sind sehr aufwändig in der Herstellung der druckbeständigen schlauchförmigen Filterelemente. Ein weiterer Nachteil ist der Volumenbedarf der Filterelemente im Druckbehälter.

Auch die DE OS 28 18 340 beschreibt ein Flüssigkeits-Feststoff-Filter, in welchem schlauchförmige Filterelemente über achsparallele Stützstäbe gezogen sind. Die Stützstäbe sind aus massivem Metall und verleihen dem Filterelement zwar Stabilität, aber auch ein sehr hohes Gewicht.

Ein Filterapparat zur Eindickung von Suspensionen ist aus der US 4511471 bekannt. In einem Druckbehälter sind Kerzenfilterlement in Form von Rohren. Die Räume zwischen den Filterrohren sind durch senkrechte Metallwände abgetrennt. Dabei beansprucht eine relativ kleine Filterfläche einen sehr grossen Raum.

Aus der US 2003121855 A1 ist ein Membranfilter, welches auch als Ultrafilter bekannt ist. Die Module bestehen aus Membranen, die einen Hohlkörper bilden. Die Membranmodule werden an ihren oberen und unteren Enden oder Ecken fixiert, um dazwischen Freiräume für die zu filtrierende Flüssigkeit zu schaffen. Dazwischen sind flexible Aufhänger als Abstandhalter vorgesehen, damit die Membranen während der Ultrafiltration nicht zusammengedrückt werden. Es handelt sich um eine aufwändige Haltekonstruktion, um einen Freiraum aufrecht zu erhalten. Die Haltekonstruktion hat, neben dem Aufwand und den Kosten, den Nachteil, dass an diesen Positionen die Filtermembranen zusätzlichen mechanischen Belastungen ausgesetzt sind.

Bei der JP 8131783 handelt es sich auch um ein Membranfilter mit sackartigen Membranen, die Seite an Seite angeordnet sind. In einem offenen Behälter sind zwischen Filterelementen hängende Distanzhalter angeordnet. Unterhalb des Filterpakets ist eine Vorrichtung zur Eintragung von Luft vorgesehen.

Aus der US 2 568 085 A ist eine Vorrichtung zur Abtrennung von Feststoffen bekannt, bei welchem die rechteckigen Filterelemente aus einem Rahmen und einem flexiblen Gitter oder Matte bestehen, die als Stütze für das darfüber gespannte Filtergewebe und den Filtratablauf dient. Das metallische Stützgitter ist schwer und das Filterelement aufwändig in seiner Konstruktion. Ein weiterer Nachteil ist, dass der Filtratablauf von jedem einzelnen Filterelement Ober eine separate Ablaufleitung erfolgt, die erst dann zu einem Sammelrohr geführt wird. Das bedeutet zusätzlichen Materialaufwand.

Aufgabe der Erfindung ist es, möglichst viel Filterfläche auf kleinstem Raum so unterzubringen, dass der sich ablagernde Feststoff aber trotzdem in konzentrierter Form zyklisch aus dem Filter herausgespült werden kann.

Die Aufgabe wird erfindungsgemäß dadurch gelöst, dass Stützgitter aus flachgewalzten Gitterrohren bestehen, die an ihrer Aussenseite glatt sind. Das heisst, die Aussenseite weist eine glatte Oberfläche ohne Rippen auf. Die flachen Stützgitter haben den Vorteil, dass sie im Druckbehälter ein kleines Volumen einnehmen, und trotz geringem Materialaufwand druckbeständig sind. Eine glatte Oberfläche verhindert das Anhaften von Rückständen an Filterkuchen nach dem Rückspülen bei der Reinigung der Filterelemente.

Die Stützgitter verfügen im Innern über Längsstege, welche so ausgebildet sind, dass sich Kanäle bilden, welche den Filtratfluss zum Filtratablaufrohr zulassen. Das hat den Vorteil, dass ein ungehinderter Filtratabfluss erfolgen kann.

Die vertikalen angeordneten Filterelemente sind an dem horizontalen Filtratablaufrohr vorteilhaft so aufgehängt, dass die durch den Zulauf zugeführte Suspension von oben zwischen die Filterelemente gelangt und in einfacher Weise eine grosse Anzahl Filterelemente an den Filtratablauf angeschlossen werden kann.

Es ist von Vorteil die Stützgitter aus Kunststoff zu fertigen. Das hat den Voteil der Fertigung mit möglichst wenig Material und geringem Gewicht für die Aufhängung im Flter und die einfache Montage..

Dabei sind die Filterelemente hängend an einem horizontal angeordneten Filtratablaufrohr an der oberen Hälfte ihrer Länge befestigt mit zwischen den Filterelementen hängenden Distanzhaltern. Das flache Stützgitter hat den Vorteil, dass mit minimalem Materialaufwand druckbeständige Filterelemente hergestellt werden können, welche auch ein minimales Volumen einnehmen. Durch die zwischen den Filterelementen hängenden Distanzhalter kann auch der Raum zwischen den Filterelementen auf ein notwendiges Minimum reduziert werden.

Die Distanzhalter bestehen mit Vorteil auch aus Kunststoff.

Mit der durch den Filtratablauf zugeführten Flüssigkeit, wird der auf den Filterelementen abgelagerte Feststoff abgelöst und nach unten zum Konzentrataustritt verdrängt.

Die Filterpakete sind im Druckbehälter so angeordnet, dass sie beim Rückspülen von den Wänden des Druckbehälters oder dafür vorgesehenen Trennwänden so abgestützt werden, dass sie sich nicht weiter aufblähen können als zulässig ist um eine Beschädigung der Filterelemente zu verhindern.

Die Distanzhalter schliessen in ihren oberen und unteren Kanten mit den Filterelementen ab und verfügen über vertikale Längsstege, welche so ausgebildet sind, dass sie zum Filterelement hin vorstehen und der beim Rückspülen abgelöste Feststoff nach unten zum Konzentrataustritt gespült werden kann.

Die Abstandhalter zwischen den Filterelementen bestehen aus einem Elastomer oder aus Kunststoff und Dichtungen aus Elastomer zwischen Abstandhalter und Filterelement. Das hat den Vorteil, dass der Abstand zwischen den Elementen falls nötig den Prozessbedingen einer Anwendung angepasst werden kann.

Die Anwendung der Vorrichtung ist besonders zur Filtration von Feststoffen aus einer Flüssigkeit mit einer Partikelgrösse von 0,1 bis 10 Mikrometer und einem Feststoffgehalt der zu filtrierenden Suspension von 1 mg/l bis 5000 mg/l geeignet.

Die Erfindung soll anhand von Zeichnungen näher beschrieben werden.

Es zeigen:
Fig. 1 ein Filtergehäuse mit Einbauten im seitlichen Querschnitt.
Fig. 2 ein Filtergehäuse mit Einbauten im Querschnitt von oben.
Fig. 3 Ein detailierter Querschnitt der Filterelemente von oben.
Fig. 4 Ein Querschnitt durch das Filtergehäuse gemäss Fig. 1 während der Filtration.
Fig. 5 Ein Querschnitt durch das Filtergehäuse gemäss Fig. 1 während der Rückspülung.

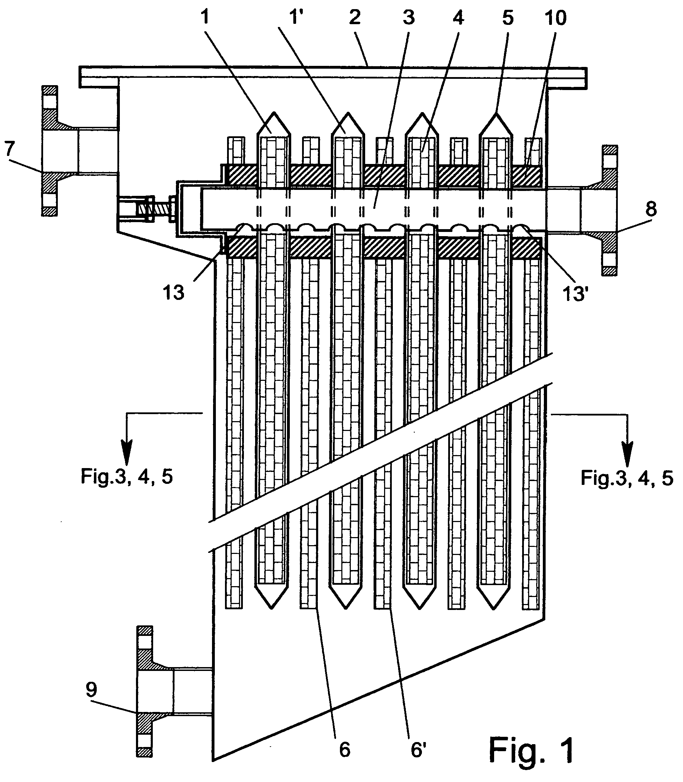

In Fig. 1 werden Filterelemente mit den Bezugszeichen 1,1' bezeichnet. Die Filterelemente 1,1' sind in einem Druckbehälter 2 hängend an einem horizontalen Filtratablaufrohr 3 mit Filtratablauflöchern 13,13' befestigt. Innerhalb der Filterelemente 1,1' sind flache Stützgitter 4 vorgesehen, die von einem vollständig geschlossenen Filtermedium 5 umgeben sind. Der Druckbehälter 2 ist mit einem Stutzen 7, einem Stutzen 8 sowie einem Stutzen 9 vorgesehen. Zwischen den einzelnen Filterelementen 1,1' sind Distanzhalter 6,6' vorgesehen. Die Distanzhalter 6,6' ragen weder im unteren noch im oberen Teil über die Filterelemente 1,1' hinaus.

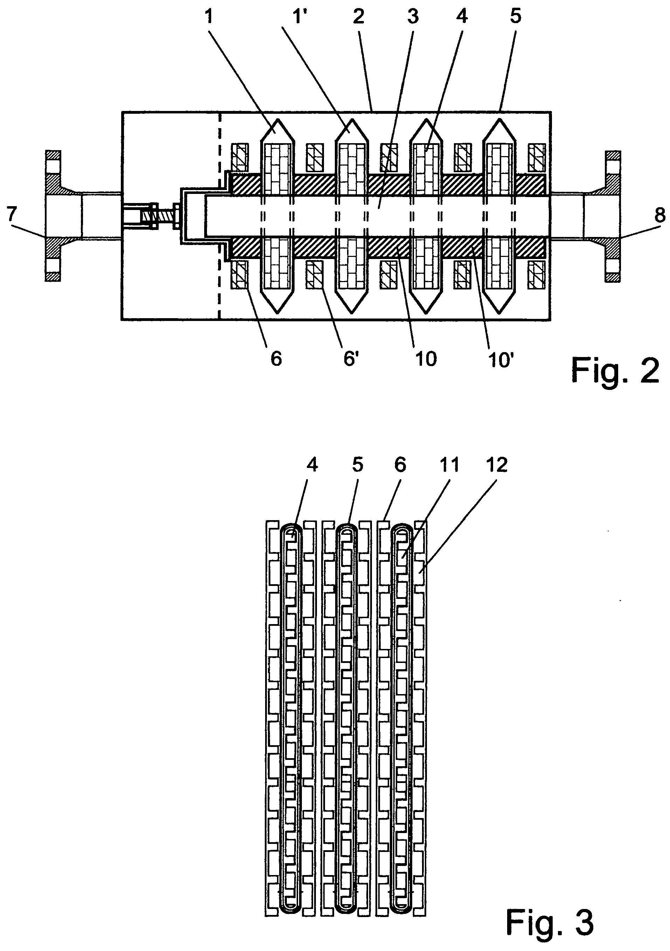

In Figur 2 sind Einbauten im Querschnitt von oben gezeigt, wobei gleiche Teile mit denselben Bezugszeichne wie in Figur 1 beschrieben sind.

In Figur 3 sind Stützgitter 4, Filtermedium 5, Distanzhalter 6, die Filtratablaufkanäle 11 und die Suspensionskanäle 12 der Filterelemente 1,1' gezeigt.

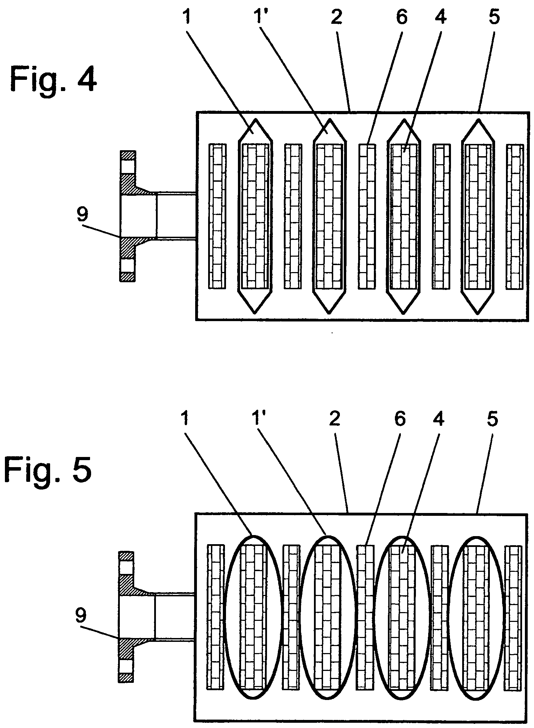

In Fig. 4 ist ein Querschnitt durch das Filtergehäuse gemäss Fig. 1 während der Filtration dargestellt.

InFig. 5 ein Querschnitt durch das Filtergehäuse gemäss Fig. 1 während der Rückspülung.

Im Betrieb erfolgt die Zufuhr einer Trübe über den Stutzen 7 in den Druckbehälter 2. Vom Druckbehälter 2 durchströmt die Trübe das Filtermedium 5 und verlässt als Klarfiltrat über die Filtratablaufkanäle 11 des flachen Stützgitters 4 und das horizontale Filtratablaufrohr 3 den Druckbehälter 2. Dabei wird der in der Suspension enthaltene Feststoff vom Filtermedium 5 zurückgehalten und lagert sich auf der Oberfläche des Filtermediums 5 ab. Nach beendeter Filtration erfolgt die Reinigung der Filterelemente durch Rückspülen oder Rückblasen. Dabei verhindern die Distanzhalter 6 dass die Oberflächen der Filtermedien sich durch das aufblähen gegeneinander pressen und sich der Feststoff dazwischen verklemmt. Der abgelöste Feststoff wird dabei durch die Suspensionskanäle 12 aus dem Zwischenraum der Filterelemente herausgespült so dass ein Konzentrat des Feststoffes über den Stutzen 9 am unteren Ende des Druckbehälters 2, ausgetragen werden kann.

Die Funktionsfähigkeit der Erfindung wurde anhand eines Prototyps geprüft. Dafür wurden fünf Filterelemente mit einer Dicke von < 12 mm einer Breite von 155 mm und einer Länge von 2000 mm in einen Druckbehälter eingebaut. Die aktive Filterfläche betrug 3 m² und das Behältervolumen weniger als 80 Liter resp. 27 Liter pro m². Das ist gegenüber bekannten rückspülbaren Druckfiltern, ein signifikanter Unterschied.

## Patentansprüche

1. Vorrichtung zur Abtrennung von Feststoffenpartikeln aus Flüssigkeiten, bestehend aus einem Druckbehälter (2), einem oder mehreren Filterelementregistern mit hängend an einem horizontalen Filtratablaufrohr (3) angeordneten Filterelementen (1,1'), wobei die Filterelemente (1,1') aus einem im wesentlichen flachen Stützgitter (4), einem rundum geschlossenen Filtermedium (5) und dazwischen hängende Distanzhalter (6) bestehen, **dadurch gekennzeichnet, dass** die Stützgitter (4) aus flachgewalzten Gitterrohren bestehen, die an der Außenseite glatt sind, wobei die Stützgitter (4) im Innern über Längsstege verfügen, welche so ausgebildet sind, dass sich Kanäle bilden, welche den Filtratfluss zum Filtratablaufrohr (3) zulassen.

2. Vorrichtung nach Anspruch 1, **dadurch gekennzeichnet, dass** das Stützgitter (4) aus einem Kunststoff besteht.

3. Vorrichtung nach Anspruch 1, **dadurch gekennzeichnet, dass** die Distanzhalter (6) über Längsstege verfügen.

4. Vorrichtung nach Anspruch 3, **dadurch gekennzeichnet, dass** die Distanzhalter (6) aus einem Kunststoff bestehen.

5. Vorrichtung nach Anspruch 1, **dadurch gekennzeichnet, dass** die Abdichtung der Abstandshalter (10) zwischen den Filterelementen (1,1') aus einem Elastomer bestehen.

6. Anwendung der Vorrichtung nach den Ansprüchen 1 - 5 zur Filtration von Feststoffen in einer Flüssigkeit mit einer Partikelgrösse von 0.1 bis 10 Mikrometern und einem Feststoffgehalt von 1 mg/l bis 5000 mg/l.

## Claims

1. A device for separating solid particles from liquids, comprising a pressure vessel (2) and one or more filter element registers having filter elements (1,1') disposed in suspension on a horizontal filtrate discharge pipe (3), wherein the filter elements (1,1') comprise a substantially flat support mesh (4), a completely enclosed filter medium (5), and spacers (6) suspended therebetween, **characterized in that** the support mesh (4) is formed of rolledflat mesh pipes, the support mesh (4) comprise, in the interior thereof, logitudinal webs desighned to form filtrate discharge channels, which permit the filtrate to flow to the filtrate discharge pipe (3).

2. Device according to claim 1, **characterized in that** the support mesh (4) is made of a plastic.

3. Device according to claim 1, **characterized in that** the spacers (6) comprise longitudinal webs.

4. Device according to claim 3, **characterized in that** the spacers (6) are made of a plastic.

5. Device according to claim 1, **characterized in that** the sealing of the spacers (10) between the filter elements (1,1') comprises an elastomer.

6. An application of the device according to claims 1 to 5, for the filtration of solid paticles from a liquid having a particle size of 0.1 bis 10 micrometers and a solid content of 1 mg/l to 5000 mg/l.

## Revendications

1. Dispositif destiné à la séparation de particules solides des liquides, composé d'un récipient sous pression (2), d'un ou plusieurs registres avec élément filtrant avec des éléments filtrants (1, 1') suspendus sur un tube d'évacuation des filtrats horizontal (3), les éléments filtrants (1,1') comprenant une grille d'appui généralement plane (4), une substance filtrante fermée sur toute sa périphérie (5) et des entretoises (6) suspendues entre les deux éléments, **caractérisé en ce que** les grilles d'appui (4) sont à base de tubes laminés à plat, lisses sur le côté extérieur, les grilles d'appui (4) disposant de passerelles longitudinales à l'intérieur qui ont une forme telle à former des canaux qui évacuent le flux de filtrats vers le tube d'évacuation des filtrats (3).

2. Dispositif selon la revendication 1 **caractérisé en ce que** la grille d'appui (4) est en plastique.

3. Dispositif selon la revendication 1, **caractérisé en ce que** les entretoises (6) disposent de passerelles longitudinales.

4. Dispositif selon la revendication 1, **caractérisé en ce que** les entretoises (6) sont en plastique.

5. Dispositif selon la revendication 1, **caractérisé en ce que** l'étanchéité des entretoises (10) entre les éléments filtrants (1,1') est composée d'un élastomère.

6. Application du dispositif selon les revendications 1 - 5 pour la filtration de matières solides dans un liquide avec une taille des particules comprise entre 0,1 et 10 micromètres et une teneur en matières solides comprise entre 1 mg/l et 5000 mg/l.
